# EUROPEAN PATENT APPLICATION

(11) **EP 3 439 237 A1**
(43) Date of publication of application: **06.02.2019**
(21) Application number: 17773078.5
(22) Date of filing: 20.03.2017
(51) Int. Cl.: H04L 12/24

(54) **EXCEPTION MONITORING AND ALARMING METHOD AND DEVICE**

(30) Priority: 29.03.2016 CN 201610189079
(71) Applicant: Alibaba Group Holding Limited, Grand Cayman (KY)
(72) Inventor: LI, Julei, Hangzhou Zhejiang 311121 (CN)
(74) Representative: Finnegan Europe LLP
(86) International application number: PCT/CN2017/077258
(87) International publication number: WO 2017/167048

(57) **Abstract**

The present application provides an exception monitoring and alarming method and apparatus. The exception monitoring and alarming method includes: recording information about alarming for a to-be-processed alarm item; judging whether the information about alarming for the to-be-processed alarm item meets a preset fatigue condition; controlling the to-be-processed alarm item to enter a fatigue period if the judgment result is yes; and conducting alarm control on the to-be-processed alarm item in the fatigue period to reduce the number of alarm times for the to-be-processed alarm item. The present application can monitor an exception and make an alarm appropriately, thus saving resources consumed by exception alarms and reducing interferences to an alarm object.

## Description

### Technical Field

The present application relates to the field of communication technologies, and in particular, to an exception monitoring and alarming method and apparatus.

### Background Art

Exceptions such as instability and errors are unavoidable in various application systems. When an exception occurs in an application system, losses caused by the exception will be greatly reduced if an alarm can be made in time or even in advance.

In the prior art, a monitoring and alarming solution is generally used in an application system to find an exception in time. That is, an alarm message is sent to an alarm object when it is monitored that the application system fails or a system alarm threshold is reached. The existing monitoring and alarming solution has the following problem: alarm messages will be sent to an alarm object constantly when a system triggers an alarm threshold persistently, which not only causes a waste of resources, but also severely disturbs the alarm object.

### Summary of the Invention

The present application provides an exception monitoring and alarming method and apparatus, for monitoring an exception and making an alarm appropriately, thus saving resources consumed by exception alarms and reducing interferences to an alarm object.

To achieve the above objective, embodiments of the present application adopt the following technical solutions:
In a first aspect, an exception monitoring and alarming method is provided, including:
recording information about alarming for a to-be-processed alarm item;
judging whether the information about alarming for the to-be-processed alarm item meets a preset fatigue condition;
controlling the to-be-processed alarm item to enter a fatigue period if the judgment result is yes; and
conducting alarm control on the to-be-processed alarm item in the fatigue period to reduce the number of alarm times for the to-be-processed alarm item.

In a second aspect, an exception monitoring and alarming apparatus is provided, including:
a recording module configured to record information about alarming for a to-be-processed alarm item;
a judgment module configured to judge whether the information about alarming for the to-be-processed alarm item meets a preset fatigue condition;
a fatigue control module configured to control the to-be-processed alarm item to enter a fatigue period when the judgment result of the judgment module is yes; and
an alarm control module configured to conduct alarm control on the to-be-processed alarm item in the fatigue period to reduce the number of alarm times for the to-be-processed alarm item.

As can be seen from the foregoing technical solution, the present application conducts alarm control on a to-be-processed alarm item in a fatigue period to reduce the number of alarm times for the to-be-processed alarm item. On one hand, alarm processing can be performed for the to-be-processed alarm item, and on the other hand, the number of alarm times for the to-be-processed alarm item can be reduced appropriately, thus saving resources consumed by exception alarms and reducing interferences to an alarm object.

The above description is merely a brief summary of the technical solutions of the present application. Specific implementations of the present application are described specifically in the following to help those skilled in the art understand the technical means of the present application more clearly and hence implement the present application according to the content of the specification, and to make the above and other objectives, features and advantages of the present application more comprehensible.

### Brief Description of the Drawings

Those of ordinary skill in the art will be clear about various other advantages and benefits after reading detailed descriptions of the following preferred implementations. The accompanying drawings are merely used for showing the preferred implementations, and are not construed as limitations on the present application. In all the accompanying drawings, identical components are represented by identical reference numerals. In the accompanying drawings:
FIG. 1 is a schematic flowchart of an exception monitoring and alarming method according to an embodiment of the present application;
FIG. 2 is a schematic diagram of a case in which N fatigue period queues share the same fatigue period according to another embodiment of the present application;
FIG. 3 is a schematic diagram of a case in which N fatigue period queues use different fatigue periods respectively according to still another embodiment of the present application;
FIG. 4 is an exemplary diagram of conducting alarm processing on a to-be-processed alarm item by using an alarm queue and a fatigue period queue in combination according to still another embodiment of the present application; and
FIG. 5 is a schematic structural diagram of an exception monitoring and alarming apparatus according to still another embodiment of the present application.

### Detailed Description

Exemplary embodiments of the disclosure are described below in more detail with reference to the accompanying drawings. The exemplary embodiments of the disclosure are shown in the accompanying drawings; however, it should be understood that the disclosure can be implemented in various forms, and should not be limited by the embodiments described here. In contrast, the embodiments are provided such that the disclosure can be understood more thoroughly and completely, and the scope of the disclosure can be conveyed to those skilled in the art completely.

The existing exception monitoring solution has the following problem: alarm messages will be sent to an alarm object constantly when a system triggers an alarm threshold persistently, which not only causes a waste of resources, but also severely disturbs the alarm object.

To solve the above problem, the present application provides a solution, which is based on a main principle as follows: a fatigue period is set for an alarm item; the alarm item is controlled to enter the fatigue period when the alarm item meets a condition of entering the fatigue period; and alarm control is conducted for the alarm item in the fatigue period to reduce the number of alarm times for the alarm item. As such, on one hand, alarm processing can be performed for the to-be-processed alarm item; on the other hand, the number of alarm times for the to-be-processed alarm item can be reduced appropriately, thus saving resources consumed by exception alarms and reducing interferences to an alarm object.

The technical solution of the present application will be described in detail through specific embodiments as follows.

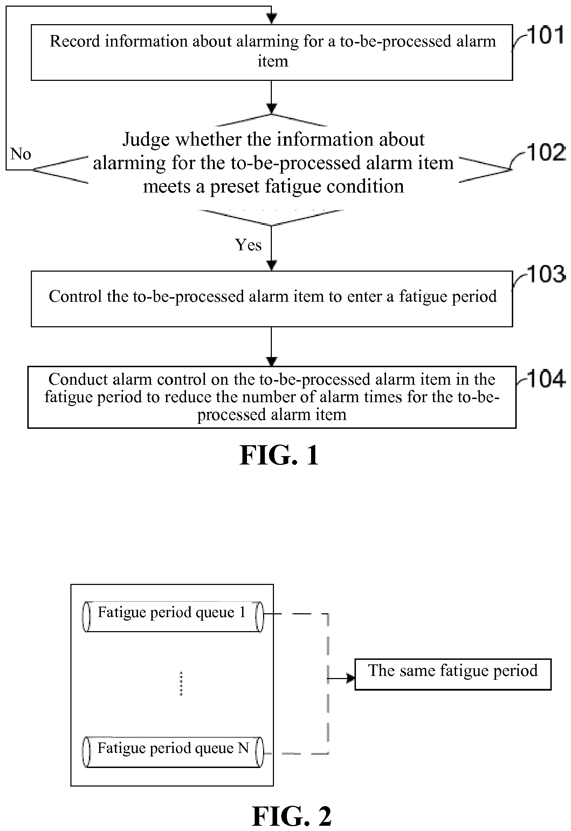

FIG. 1 is a schematic flowchart of an exception monitoring and alarming method according to an embodiment of the present application. As shown in FIG. 1, the method includes the following steps:
101: Information about alarming for a to-be-processed alarm item is recorded.
102: It is judged whether the information about alarming for the to-be-processed alarm item meets a preset fatigue condition; step 103 is performed if the judgment result is yes, and the procedure returns to step 101 if the judgment result is no.
103: The to-be-processed alarm item is controlled to enter a fatigue period.
104: Alarm control is conducted on the to-be-processed alarm item in the fatigue period to reduce the number of alarm times for the to-be-processed alarm item.

This embodiment provides an exception monitoring and alarming method, which can be performed by an exception monitoring and alarming apparatus, for monitoring an exception in a system and making an alarm appropriately, thus saving resources consumed by exception alarms and reducing interferences to an alarm object.

The method provided in this embodiment is applicable to any scenario and system in which exception monitoring is required, for example, a task scheduling system, a crawler system, an electromechanical system, an information collection system, and the like.

In this embodiment, an object that needs to be monitored, i.e., an object that may trigger an alarm, is referred to as an alarm item. The alarm item varies in specific implementations according to different application systems. For example, the alarm item is specifically a to-be-scheduled task for a task scheduling system. For another example, the alarm item is a running state of a network crawler for a crawler system. For another example, for an electromechanical system, the alarm item is an operation state of a related device or module in the electromechanical system.

To facilitate description and distinction, an alarm item that requires alarm control processing is referred to as a to-be-processed alarm item in this embodiment, and the to-be-processed alarm item can be any alarm item in any application system.

Specifically, in a normal state, the to-be-processed alarm item will trigger an alarm when meeting a preset alarm condition, i.e., send an alarm request to the exception monitoring and alarming apparatus. The exception monitoring and alarming apparatus will conduct alarm processing on the to-be-processed alarm item according to the alarm request of the to-be-processed alarm item. Here, the alarm processing mainly refers to sending an alarm message to an alarm object (or referred to as an alarm receiver). If the to-be-processed alarm item triggers alarms frequently, the exception monitoring and alarming apparatus needs to send alarm messages to the alarm object frequently. This not only wastes resources, but also causes interferences to the alarm object if the alarms are made at an inappropriate time.

To solve the above problem, in this embodiment, a fatigue period is set for the to-be-processed alarm item. The so-called fatigue period refers to a time period in which the number of alarm times for the to-be-processed alarm item can be reduced. Correspondingly, a fatigue condition is set to determine whether the to-be-processed alarm item can enter the fatigue period. On this basis, in addition to conducting alarm processing on the to-be-processed alarm item according to the alarm request of the to-be-processed alarm item in the normal state, the exception monitoring and alarming apparatus will also record information about alarming for the to-be-processed alarm item, and judge whether the to-be-processed alarm item can enter the fatigue period according to the information about alarming for the to-be-processed alarm item. Specifically, the exception monitoring and alarming apparatus judges whether the information about alarming for the to-be-processed alarm item meets a preset fatigue condition. If the judgment result is yes, i.e., the information about alarming for the to-be-processed alarm item meets the preset fatigue condition, the to-be-processed alarm item is controlled to enter the fatigue period. Moreover, in the fatigue period, alarm control is conducted on the to-be-processed alarm item to reduce the number of alarm times for the to-be-processed alarm item.

In an optional implementation, the information about alarming for the to-be-processed alarm item includes at least one of the number of alarm times for the to-be-processed alarm item and time of alarming for the to-be-processed alarm item.

The number of alarm times for the to-be-processed alarm item can refer to the total number of alarm times for the to-be-processed alarm item in a designated time period, and the designated time period may be recent one week, one day, two days, and the like.

The time of alarming for the to-be-processed alarm item can refer to time of each alarm for the to-be-processed alarm item in a designated time period.

Based on at least one of the number of alarm times for the to-be-processed alarm item and the time of alarming for the to-be-processed alarm item included in the information about alarming for the to-be-processed alarm item, the preset fatigue condition may include at least one of the following:
the number of alarm times for the to-be-processed alarm item is greater than a preset times threshold;
the time of alarming for the to-be-processed alarm item is within a preset time range; and
the frequency of alarming for the to-be-processed alarm item is greater than a preset frequency threshold.

Based on the above, the step of judging whether the information about alarming for the to-be-processed alarm item meets a preset fatigue condition includes performing at least one of the following judgment operations:
judging whether the number of alarm times for the to-be-processed alarm item is greater than the preset times threshold;
judging whether the time of alarming for the to-be-processed alarm item is within the preset time range; and
judging whether the frequency of alarming for the to-be-processed alarm item is greater than the preset frequency threshold.

If the judgment result of the at least one judgment operation is yes, it is determined that the information about alarming for the to-be-processed alarm item meets the preset fatigue condition, meaning that the to-be-processed alarm item can enter the fatigue period. Correspondingly, if any judgment result of the at least one judgment operation is no, it is determined that the information about alarming for the to-be-processed alarm item does not meet the preset fatigue condition, meaning that the to-be-processed alarm item cannot enter the fatigue period.

Duration of a real alarm time period can be obtained according to the time of the first alarm for the to-be-processed alarm item and the time of the last alarm for the to-be-processed alarm item in the designated time period. The frequency of alarming for the to-be-processed alarm item can be obtained by using the duration of the real alarm time period and the total number of alarm times for the to-be-processed alarm item in the designated time period.

In an optional implementation, the specific implementation of conducting alarm control on the to-be-processed alarm item in the fatigue period to reduce the number of alarm times for the to-be-processed alarm item includes:
intercepting alarm requests of the to-be-processed alarm item in the fatigue period, and conducting alarm processing on the to-be-processed alarm item based on a principle that the number of alarm times is less than the number of alarm requests.

Specifically, in the fatigue period, the exception monitoring and alarming apparatus monitors the to-be-processed alarm item, intercepts alarm requests sent to the exception monitoring and alarming apparatus when finding that the to-be-processed alarm item triggers an alarm as it meets the preset alarm condition, and conducts alarm processing on the to-be-processed alarm item based on the principle that the number of alarm times is less than the number of alarm requests.

This embodiment does not limit the manner in which the exception monitoring and alarming apparatus conducts alarm processing on the to-be-processed alarm item based on the principle that the number of alarm times is less than the number of alarm requests.

For example, in the fatigue period, the exception monitoring and alarming apparatus can conduct alarm processing on the to-be-processed alarm item at intervals of one or several alarm requests.

For another example, in the fatigue period, the exception monitoring and alarming apparatus does not conduct alarm processing on the to-be-processed alarm item.

For another example, in the fatigue period, the exception monitoring and alarming apparatus can conduct alarm processing on the to-be-processed alarm item only once. For example, the exception monitoring and alarming apparatus can conduct alarm processing on the to-be-processed alarm item in response to the first alarm request only, and no longer conducts alarm processing on the to-be-processed alarm item for subsequent alarm requests.

In an optional implementation, in the case that the information about alarming for the to-be-processed alarm item meets the preset fatigue condition, an implementation of controlling the to-be-processed alarm item to enter the fatigue period includes:
making a fatigue mark for the to-be-processed alarm item, and starting a timer to time the fatigue period. The exception monitoring and alarming apparatus can judge whether an alarm item carries a fatigue mark. When finding an alarm item carrying a fatigue mark, it is determined that alarm control needs to be conducted on the alarm item in a fatigue period corresponding to the alarm item to reduce the number of alarm times for the to-be-processed alarm item. The fatigue period ends when the timing of the timer ends.

In another optional implementation, two storage queues are pre-configured: one is an alarm queue, and the other is a fatigue period queue. The alarm queue is used to store alarm items that require alarm processing according to each alarm request. In other words, for an alarm item in the alarm queue, the exception monitoring and alarming apparatus needs to conduct alarm processing once for the alarm item each time an alarm request of the alarm item is received. The fatigue period queue is used to store alarm items on which alarm processing needs to be conducted based on the principle that the number of alarm times is less than the number of alarm requests. In other words, for an alarm item in the fatigue period queue, the exception monitoring and alarming apparatus should not conduct alarm processing once for the alarm item each time an alarm request of the alarm item is received, but should reduce the number of alarm times for the alarm item as much as possible.

Based on the above, in the case that the information about alarming for the to-be-processed alarm item meets the preset fatigue condition, an implementation of controlling the to-be-processed alarm item to enter the fatigue period includes:
removing the to-be-processed alarm item from the alarm queue and adding the to-be-processed alarm item into the fatigue period queue.

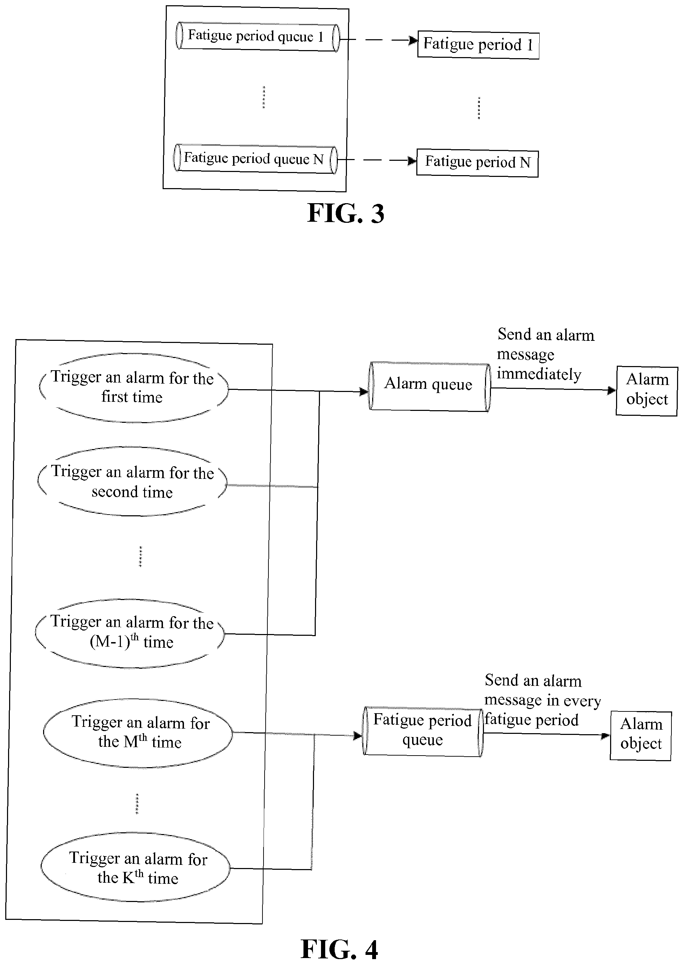

It should be noted that there can be one or more fatigue period queues. If multiple fatigue period queues are used, the fatigue period queues can have the same fatigue period length or different fatigue period lengths. FIG. 2 shows a case in which N fatigue period queues share the same fatigue period, and FIG. 3 shows a case in which N fatigue period queues use different fatigue periods respectively. N is a natural number greater than 1.

FIG. 4 is an exemplary diagram of conducting alarm processing on a to-be-processed alarm item by using an alarm queue and a fatigue period queue in combination. The to-be-processed alarm item is located in the alarm queue. In the process from the first trigger of an alarm to the (M-1)^{th} trigger of an alarm by the to-be-processed alarm item, the exception monitoring and alarming apparatus sends an alarm message for the to-be-processed alarm item to the alarm object immediately each time a trigger of an alarm is monitored. It should be noted that in the process from the first trigger of an alarm to the (M-1)^{th} trigger of an alarm, time intervals between two adjacent triggers of alarms can be the same or different.

When the to-be-processed alarm item triggers an alarm for the M^{th} time, the exception monitoring and alarming apparatus determines that the number of alarm times for the to-be-processed alarm item is greater than a preset times threshold, i.e., the condition of entering the fatigue period is met. Therefore, the exception monitoring and alarming apparatus removes the to-be-processed alarm item from the alarm queue and adds it to the fatigue period queue, and sends an alarm message for the to-be-processed alarm item to the alarm object. Then, it is assumed that the to-be-processed alarm item further triggers (K-M) alarms in the fatigue period, but the exception monitoring and alarming apparatus no longer sends an alarm message for the to-be-processed alarm item to the alarm object. M and K are both natural numbers, K>M, and M>1.

It should be noted that, the implementation in which the exception monitoring and alarming apparatus merely sends one alarm message to the alarm object in response to the first alarm triggered by the to-be-processed alarm item but does not send alarm messages for other alarms in the entire fatigue period is merely an example. The present application is not limited to this implementation. Any implementation capable of ensuring that the number of alarm times is less than the number of alarm triggering times falls within the protection scope of the embodiment of the present application.

Further, to conduct alarm processing for the to-be-processed alarm item normally, timely and reasonably, the to-be-processed alarm item should not always stay in the fatigue period. On this basis, an alarm condition is preset in this embodiment. When the to-be-processed alarm item meets the preset alarm condition, the to-be-processed alarm item can be removed from the fatigue period queue and added into the alarm queue again.

The foregoing alarm condition can include at least one of the following:
the fatigue period ends, meaning that the to-be-processed alarm item requires normal alarm processing again and thus needs to be added to the alarm queue again;
a time interval between two adjacent alarm requests of the to-be-processed alarm item in the fatigue period is greater than a preset time interval threshold, indicating that the to-be-processed alarm item does not trigger alarms frequently anymore and thus needs to be added to the alarm queue again;
an alarm system is turned off, meaning that a default state is restored, wherein normal alarm processing is conducted on all alarm items, and thus the to-be-processed alarm item needs to be added to the alarm queue again; and
an alarm rule is modified, meaning that a default state is restored, wherein normal alarm processing is conducted on all alarm items by default, and thus the to-be-processed alarm item needs to be added to the alarm queue again.

Further, when the to-be-processed alarm item meets the condition of entering the fatigue period again, the to-be-processed alarm item can be added to the fatigue period queue again from the alarm queue, thus implementing circular processing.

In this embodiment, alarm processing can be conducted on a to-be-processed alarm item normally in a non-fatigue period, and the number of alarm times for the to-be-processed alarm item can be reduced in a fatigue period. On one hand, exception alarming can be conducted for the to-be-processed alarm item, and on the other hand, the number of alarm times for the to-be-processed alarm item can be reduced, thus saving resources consumed by exception alarms and reducing interferences to an alarm object.

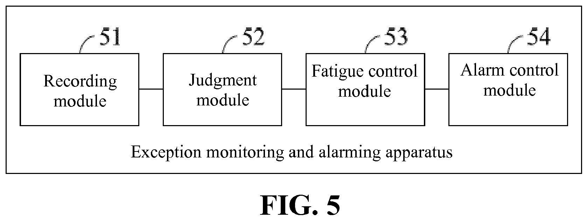

FIG. 5 is a schematic structural diagram of an exception monitoring and alarming apparatus according to still another embodiment of the present application. As shown in FIG. 5, the apparatus includes a recording module 51, a judgment module 52, a fatigue control module 53, and an alarm control module 54.

The recording module 51 is configured to record information about alarming for a to-be-processed alarm item.

The judgment module 52 is configured to judge whether the information about alarming for the to-be-processed alarm item meets a preset fatigue condition.

The fatigue control module 53 is configured to control the to-be-processed alarm item to enter a fatigue period when the judgment result of the judgment module 52 is yes.

The alarm control module 54 is configured to conduct alarm control on the to-be-processed alarm item in the fatigue period to reduce the number of alarm times for the to-be-processed alarm item.

In an optional implementation, the recording module 51 can be specifically configured to record at least one of the number of alarm times for the to-be-processed alarm item and time of alarming for the to-be-processed alarm item.

The number of alarm times for the to-be-processed alarm item can refer to the total number of alarm times for the to-be-processed alarm item in a designated time period, and the designated time period may be recent one week, one day, two days, and the like.

The time of alarming for the to-be-processed alarm item can refer to time of each alarm for the to-be-processed alarm item in a designated time period.

Based on at least one of the number of alarm times for the to-be-processed alarm item and the time of alarming for the to-be-processed alarm item included in the information about alarming for the to-be-processed alarm item, the preset fatigue condition can include at least one of the following:
the number of alarm times for the to-be-processed alarm item is greater than a preset times threshold;
the time of alarming for the to-be-processed alarm item is within a preset time range; and
the frequency of alarming for the to-be-processed alarm item is greater than a preset frequency threshold.

Corresponding, the judgment module 52 can be specifically configured to perform at least one of the following judgment operations:
judging whether the number of alarm times for the to-be-processed alarm item is greater than the preset times threshold;
judging whether the time of alarming for the to-be-processed alarm item is within the preset time range; and
judging whether the frequency of alarming for the to-be-processed alarm item is greater than the preset frequency threshold.

If the judgment result of the at least one judgment operation is yes, it is determined that the information about alarming for the to-be-processed alarm item meets the preset fatigue condition.

Duration of a real alarm time period can be obtained according to the time of the first alarm for the to-be-processed alarm item and the time of the last alarm for the to-be-processed alarm item in the designated time period. The frequency of alarming for the to-be-processed alarm item can be obtained by using the duration of the real alarm time period and the total number of alarm times for the to-be-processed alarm item in the designated time period.

In an optional implementation, the alarm control module 54 can be specifically configured to:
intercept alarm requests of the to-be-processed alarm item in the fatigue period, and conduct alarm processing on the to-be-processed alarm item based on a principle that the number of alarm times is less than the number of alarm requests.

In an optional implementation, the fatigue control module 53 can be specifically configured to:
remove the to-be-processed alarm item from an alarm queue and add the to-be-processed alarm item into a fatigue period queue.

The alarm queue is used to store alarm items that require alarm processing according to each alarm request. The fatigue period queue is used to store alarm items on which alarm processing needs to be conducted based on the principle that the number of alarm times is less than the number of alarm requests.

Further, the fatigue control module 53 is also configured to:
remove the to-be-processed alarm item from the fatigue period queue and add the to-be-processed alarm item into the alarm queue again when the to-be-processed alarm item meets a preset alarm condition.

The preset alarm condition can include at least one of the following:
the fatigue period ends, meaning that the to-be-processed alarm item requires normal alarm processing again and thus needs to be added to the alarm queue again;
a time interval between two adjacent alarm requests of the to-be-processed alarm item in the fatigue period is greater than a preset time interval threshold, indicating that the to-be-processed alarm item does not trigger alarms frequently anymore and thus needs to be added to the alarm queue again;
the alarm system is turned off, meaning that a default state is restored, wherein normal alarm processing is conducted on all alarm items by default, and thus the to-be-processed alarm item needs to be added to the alarm queue again; and
the alarm rule is modified, meaning that a default state is restored, wherein normal alarm processing is conducted on all alarm items by default, and thus the to-be-processed alarm item needs to be added to the alarm queue again.

Further, the fatigue control module 53 is also configured to: when the to-be-processed alarm item meets the condition of entering the fatigue period again, add the to-be-processed alarm item to the fatigue period queue again from the alarm queue, thus implementing circular processing.

In the exception monitoring and alarming apparatus provided in this embodiment, alarm processing can be conducted on a to-be-processed alarm item normally in a non-fatigue period, and the number of alarm times for the to-be-processed alarm item can be reduced in a fatigue period. On one hand, exception alarming can be conducted for the to-be-processed alarm item, and on the other hand, the number of alarm times for the to-be-processed alarm item can be reduced, thus saving resources consumed by exception alarms and reducing interferences to an alarm object.

Those of ordinary skill in the art can understand that all or part of steps implementing the method embodiments can be completed by a program instructing related hardware. The program can be stored in a computer readable storage medium. When being executed, the program performs steps of the method embodiments. The storage medium includes various media that can store program codes, such as a ROM, a RAM, a magnetic disk, or an optical disc.

Finally, it should be noted that the above embodiments are merely used for describing the technical solution of the present application, instead of limiting the present application. Although the present application is described in detail with reference to the foregoing embodiments, those of ordinary skill in the art should understand that they can still make modifications on the technical solutions recorded in the above embodiments or perform equivalent replacements on all or a part of technical features of the above embodiments. These modifications or replacements do not cause the essences of the corresponding technical solutions to depart from the scope of the technical solutions of the embodiments of the present application.

## Claims

1. An exception monitoring and alarming method, comprising:
recording information about alarming for a to-be-processed alarm item;
judging whether the information about alarming for the to-be-processed alarm item meets a preset fatigue condition;
controlling the to-be-processed alarm item to enter a fatigue period if the judgment result is yes; and
conducting alarm control on the to-be-processed alarm item in the fatigue period to reduce the number of alarm times for the to-be-processed alarm item.

2. The method according to claim 1, wherein the step of recording information about alarming for a to-be-processed alarm item comprises:
recording at least one of the number of alarm times for the to-be-processed alarm item and time of alarming for the to-be-processed alarm item;
the step of judging whether the information about alarming for the to-be-processed alarm item meets a preset fatigue condition comprises performing at least one of the following judgment operations:
judging whether the number of alarm times for the to-be-processed alarm item is greater than a preset times threshold;
judging whether the time of alarming for the to-be-processed alarm item is within a preset time range; and
judging whether the frequency of alarming for the to-be-processed alarm item is greater than a preset frequency threshold;
wherein it is determined that the information about alarming for the to-be-processed alarm item meets the preset fatigue condition if the judgment result of the at least one judgment operation is yes.

3. The method according to claim 1, wherein the step of conducting alarm control on the to-be-processed alarm item in the fatigue period to reduce the number of alarm times for the to-be-processed alarm item comprises:
intercepting alarm requests of the to-be-processed alarm item in the fatigue period, and conducting alarm processing on the to-be-processed alarm item based on a principle that the number of alarm times is less than the number of alarm requests.

4. The method according to any of claims 1 to 3, wherein the step of controlling the to-be-processed alarm item to enter a fatigue period comprises:
removing the to-be-processed alarm item from an alarm queue and adding the to-be-processed alarm item into a fatigue period queue,
wherein the alarm queue is used to store alarm items that require alarm processing according to each alarm request, and the fatigue period queue is used to store alarm items on which alarm processing needs to be conducted based on the principle that the number of alarm times is less than the number of alarm requests.

5. The method according to claim 4, further comprising:
removing the to-be-processed alarm item from the fatigue period queue and adding the to-be-processed alarm item into the alarm queue when the to-be-processed alarm item meets a preset alarm condition.

6. The method according to claim 5, wherein the preset alarm condition comprises at least one of the following:
the fatigue period ends;
a time interval between two adjacent alarm requests of the to-be-processed alarm item in the fatigue period is greater than a preset time interval threshold;
an alarm system is turned off; and
an alarm rule is modified.

7. An exception monitoring and alarming apparatus, comprising:
a recording module configured to record information about alarming for a to-be-processed alarm item;
a judgment module configured to judge whether the information about alarming for the to-be-processed alarm item meets a preset fatigue condition;
a fatigue control module configured to control the to-be-processed alarm item to enter a fatigue period when the judgment result of the judgment module is yes; and
an alarm control module configured to conduct alarm control on the to-be-processed alarm item in the fatigue period to reduce the number of alarm times for the to-be-processed alarm item.

8. The apparatus according to claim 7, wherein the recording module is specifically configured to:
record at least one of the number of alarm times for the to-be-processed alarm item and time of alarming for the to-be-processed alarm item; and
the judgment module is specifically configured to perform at least one of the following judgment operations:
judging whether the number of alarm times for the to-be-processed alarm item is greater than a preset times threshold;
judging whether the time of alarming for the to-be-processed alarm item is within a preset time range; and
judging whether the frequency of alarming for the to-be-processed alarm item is greater than a preset frequency threshold;
wherein it is determined that the information about alarming for the to-be-processed alarm item meets the preset fatigue condition if the judgment result of the at least one judgment operation is yes.

9. The apparatus according to claim 7, wherein the alarm control module is specifically configured to:
intercept alarm requests of the to-be-processed alarm item in the fatigue period, and conduct alarm processing on the to-be-processed alarm item based on a principle that the number of alarm times is less than the number of alarm requests.

10. The apparatus according to any of claims 7 to 9, wherein the fatigue control module is specifically configured to:
remove the to-be-processed alarm item from an alarm queue and add the to-be-processed alarm item into a fatigue period queue,
wherein the alarm queue is used to store alarm items that require alarm processing according to each alarm request, and the fatigue period queue is used to store alarm items on which alarm processing needs to be conducted based on the principle that the number of alarm times is less than the number of alarm requests.

11. The apparatus according to claim 10, wherein the fatigue control module is further configured to:
remove the to-be-processed alarm item from the fatigue period queue and add the to-be-processed alarm item into the alarm queue when the to-be-processed alarm item meets a preset alarm condition.

12. The apparatus according to claim 11, wherein the preset alarm condition comprises at least one of the following:
the fatigue period ends;
a time interval between two adjacent alarm requests of the to-be-processed alarm item in the fatigue period is greater than a preset time interval threshold;
an alarm system is turned off; and
an alarm rule is modified.
